# EUROPEAN PATENT SPECIFICATION

(11) **EP 3 045 462 B1**
(45) Date of publication and mention of the grant of the patent: **25.03.2020**
(21) Application number: 14460079.8
(22) Date of filing: 31.10.2014
(51) Int. Cl.: C07F 9/38, C07F 9/40

(54) **3-ARYL-2-PHOSPHORYL SUBSTITUTED 1-INDANONES AND THE METHOD FOR THEIR PREPARATION**
3-ARYL-2-PHOSPHORYLSUBSTITUIERTE 1-INDANONE UND VERFAHREN ZU DEREN HERSTELLUNG
1-INDANONES 3-ARYL-2-PHOSPHORYL SUBSTITUÉ ET LEUR PROCÉDÉ DE PRÉPARATION

(43) Date of publication of application: 20.07.2016
(73) Proprietor: Centrum Badan Molekularnych I Makromolekularnych Pan, 90-363 Lodz (PL)
(72) Inventor: Balczewski, Piotr, 91-225 Lodz (PL); Szczesna, Dorota, 99-232 Zadzim (PL)

(56) References cited:
- VAIDYA, TULAZA ET AL: "A Highly Reactive Dicationic Iridium(III) Catalyst for the Polarized Nazarov Cyclization Reaction", ANGEWANDTE CHEMIE, INTERNATIONAL EDITION, vol. 49, no. 19, 2010, pages 3363-3366, XP002742703, ISSN: 1433-7851, DOI: 10.1002/ANIE.201000100
- LAWRENCE, N. J. ET AL.: TETRAHEDRON LETTERS, vol. 47, 2006, - 2006, pages 1637-1640, XP025003671,
- HAMASHIMA, YOSHITAKA ET AL: "Highly enantioselective fluorination reactions of .beta.-ketoesters and .beta.-ketophosphonates catalyzed by chiral palladium complexes", TETRAHEDRON, vol. 62, no. 30, 2006, pages 7168-7179, XP002742789, ISSN: 0040-4020, DOI: 10.1016/J.TET.2005.12.070

## Description

The present invention relates to the method of synthesis of 3-aryl-2-phosphoryl substituted 1 -indanones represented by the general formula 1 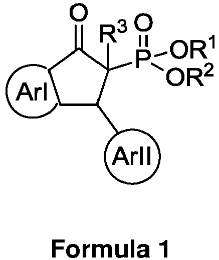 in which:
**R¹** and **R²** - are the same or different and represent hydrogen atoms, metal_atoms, sodium or potassium or an alkyl group containing 1-10 carbon atoms
**R³** - is hydrogen or a halogen atom
**ArI** and **ArII** - are the same or different and represent an aromatic ring, or **ArII** represents biaryl, containing aromatic rings, substituted or unsubstituted, selected from the group consisting of benzene, naphthalene, pyrene, or six-membered heteroaromatic rings, substituted or unsubstituted, selected from the group consisting of pyridine, pyrimidine, or heteroaromatic rings, five-membered, substituted or unsubstituted, selected from the group consisting of thiophene, pyrrole or furan.

### State of the Art

1-Indanones have found wide application in medicine, agro chemistry and in the synthesis of natural products. They are widely used as antibacterial agents, insecticides, pesticides, herbicides, anti-hepatitis C, drugs used to treat Alzheimer and lowering blood pressure and pharmaceuticals used in anticancer therapies.

In the literature there are numerous examples of methods of synthesis of 1-indanones from various substrates, but the 3-aryl-2-phosphoryl substituted 1-indanones are unknown and therefore have not previously been described in the literature in any way.

Wide range of applications of 1-indanones had an impact on-elaboration of many methods for their synthesis, using different substrates and reagents. Reaction of o-bromobenzaldehyde with alkynes in the presence of palladium acetate, leads in high yields to derivatives of 1-indenol which on further heating undergo izomerization to the appropriate 1-indanones substituted in position 2 with alkyl groups containing from 3 to 10 carbon atoms, and in position 3 with phenyl, propyl or methyl group.¹

A highly stereoselective, one-step synthesis of trans-2,3-disubstituted derivatives of 1-indanones containing in position 2, such moieties as: methyl, n-butyl, phenyl, hydrogen atom and/or in position 3 - phenyl, triethoxymethylphenyl, tert-butyl and isopropyl has also been described, by reacting phenyl alkynes and the appropriate aldehydes in the presence of antimony pentafluoride in ethanol.²

The intramolecular Friedel-Crafts alkylation of epoxy derivatives of chalcones catalyzed by indium chloride has been used for the synthesis of 2-hydroxy-3-aryl-1-indanones in very good yields.³

Irradiation of terminal, aromatic γ,δ-epoxy ketones by UV lamp (450W) leads in the tandem reaction of photochemical epoxy - rearrangement and 1,5-bi-radical cyclization to formation of 1-indanones, monosubstituted in position 2 by methyl or ethyl group, or disubstituted by two methyl groups, while retaining in position 3 hydroxyl and aryl group.⁴ The best efficiency, up to 84%, gave substrates containing electron withdrawing substituents being in the para position of the aryl group.

The stereoselective, catalyzed by complex Cu(II), tandem transformation of α,β-unsaturated ketones, including cyclization and electrophilic fluorination, leads to the corresponding derivatives of 1-indanones, substituted in the α position relative to the carbonyl group by fluorine and a methoxycarbonyl or ethoxycarbonyl group, while in the β position relative to the carbonyl group, to the corresponding derivatives of 1-indanones, substituted by 2,4,6-trimethoxyphenyl, 3-methoxyphenyl, 4-methoxyphenyl, 6-methoxyphenyl, 4-chlorophenyl, 4-nitrophenyl, 4-methylphenyl, isopropyl and phenyl. 5

Efficient and fast synthesis of 1 -indanones has also been developed by Lawrence et al⁶, wherein from chalcones in the presence of trifluoroacetic acid and microwaves were obtained 1-indanones derivatives containing aryl groups in the position 3, such as: 4-methoxyphenyl, 4,5-dimethoxy and 3,4,5-trimethoxyphenyl, 3-hydroxy-4-methoxyphenyl, 4-chlorophenyl, 3-bromo-4-methoxyphenyl, 3,4-dichlorophenyl, benzo[d][1,3]dioxol-5-yl, 4-bromophenyl, 2,6-dichlorophenyl, 2,4-dichlorophenyl, phenyl, 3-nitro-4-methoxyphenyl, 3-fluoro-4-methoxyphenyl.

In 2010, Frontier and Eisenberg⁷ described the use of electrophilic iridium Ir(III) complexes, which catalyze the Nazarov cyclization of α,β-γ,δ-aryl enones, allowing to obtain aromatic and heteroaromatic derivatives of 1 -indanones.

### Summary of the Invention

The subject of the present invention is a method for preparation of 3-aryl-2-phosphoryl substituted derivatives of 1 -indanones represented by the general formula **1,** 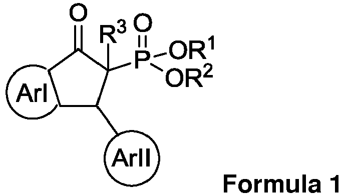 in which:
**R¹** and **R²** - are the same or different and represent hydrogen atoms, metal atoms sodium or potassium or an alkyl group containing 1-10 carbon atoms
**R³** - is hydrogen or a halogen atom
**ArI** and **ArII** - are the same or different and represent aromatic rings, or **ArII** represents biaryl, containing aromatic rings, substituted or unsubstituted, selected from the group consisting of benzene, naphthalene, pyrene, or six-membered heteroaromatic rings, substituted or unsubstituted, selected from the group consisting of pyridine, pyrimidine, or heteroaromatic rings, five-membered, substituted or unsubstituted, selected from the group consisting of thiophene, pyrrole or furan.

Hydrocarbons preparing according to the invention are shown in formulas **2, 3** or **4:**

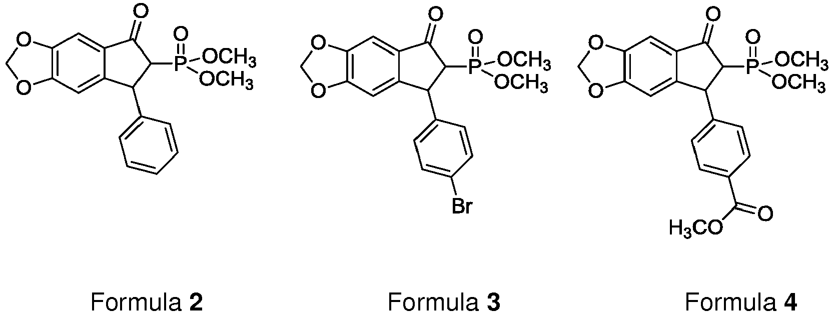

A method for preparation of 3-aryl-2-phosphoryl substituted 1-indanones of the general formula **1,** represented by formulas **2, 3** or **4,** according to the invention, consists in the fact that the reaction of cyclization of the phosphonic esters of the general formula **5** is carried out, 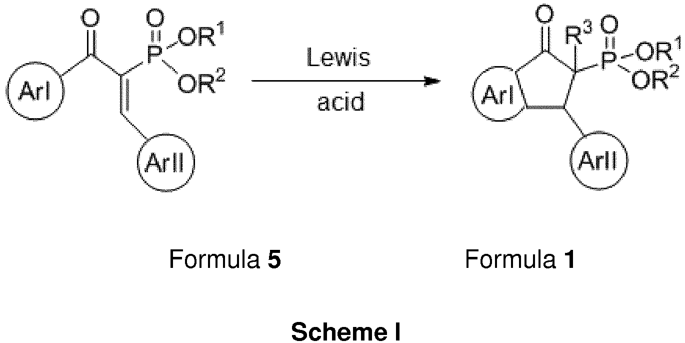 wherein **R¹, R², ArI** and **ArII** are as defined above and **R³** is a hydrogen atom, as shown in Scheme I, in the presence of a Lewis acid, eg. FeCl₃ and AlCl₃ under mild conditions, in an organic solvent, in a single reaction vessel, without isolation of intermediate products, for preparation of compounds of the formula 1, for eg. compounds represented by the formulas **2, 3** or **4.**

In the present invention, preferably, the compound of the general formula **5** with methoxy groups (**R¹=R²**=Me) is cyclized in the presence of a Lewis acid, eg. FeCl₃ and AlCl₃, in an organic solvent, eg. toluene or methylene chloride, to obtain compounds of the formula **1** in good yields, in a single reaction step.

A method for preparation of 3-aryl-2-phosphoryl substituted 1-indanones of the general formula **1,** wherein **R¹, R², ArI** and **ArII** are as defined above and **R³** is halogen, eg. fluorine, 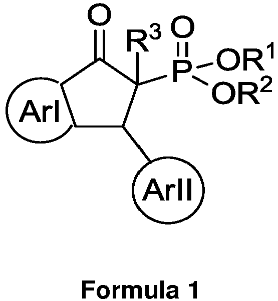 according to the invention, consists in the fact that a compound of general formula **9** wherein **R¹, R², ArI** and **ArII** are as defined above, is subjected to fluorination, under mild conditions in the presence of *N*-fluorobenzenesulfonimide **(NFSI),** in an organic solvent, in a single reaction vessel, without isolation of the intermediates, for preparation of compounds of general formula **10,** wherein **R¹, R², ArI** and **ArII** are as defined above, and **R³**=F, 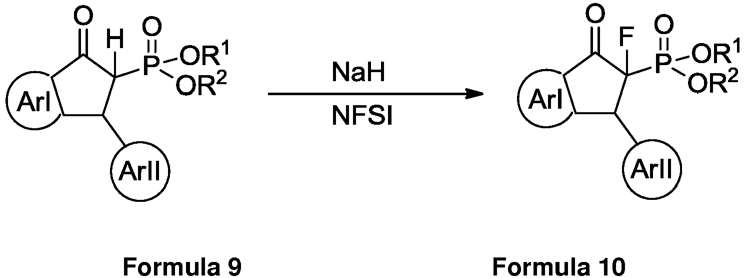 phosphonic esters represented by the formulas **6, 7** or **8,**

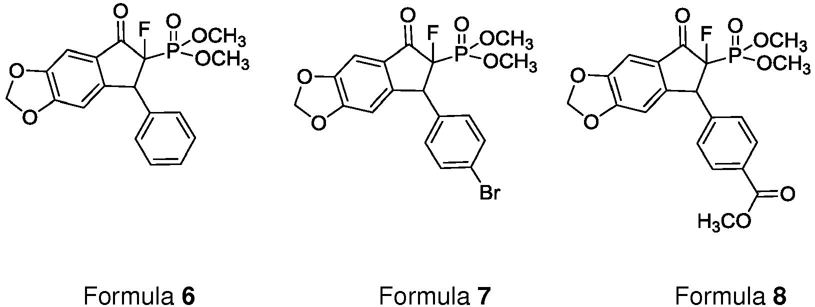

In the present invention, the compound of formula **9** with methoxy groups (**R¹=R²**=Me) is subjected to deprotonation in the position α to the carbonyl group with sodium hydride NaH, and is subjected to fluorination in the presence of *N-*fluorobenzenesulfonimide **(NFSI),** in an organic solvent, eg. tetrahydrofuran, to obtain fluorinated derivatives **10,** wherein **R¹, R², ArI** and **ArII** are as defined above, in good yields, in a single reaction step.

A method for preparation of 3-aryl-2-phosphoryl substituted 1-indanones of general formula **1,** wherein **ArI** and **ArII** are as defined above, **R³** is hydrogen atom, **R¹** and **R²** are the same or different and represent hydrogen atom H or a metal atom, sodium or potassium, according to the invention consists in the fact that the appropriate phosphonic esters are subjected to a hydrolysis reaction, under mild conditions,_in an alkaline environment, in an organic solvent, without purification, in quantitative yields.

A method for preparation of 3-aryl-2-phosphoryl substituted 1-indanones of general formula **1,** wherein **ArI** and **ArII** are as defined above, according to the invention consists in the fact that a compound of general formula **18,** wherein **R¹=R²**=Me, and **R³** is as defined above, is subjected to a reaction in the presence of trimethylsilyl bromide TMSBr, in an organic solvent, eg. in a mixture of methylene chloride and methanol, then a transformation of the resulting acid of general formula **19** into a mono or disalt of general formula **20** is carried out, by alkali, sodium or potassium hydroxide, in quantitative yields, as shown in Scheme III.

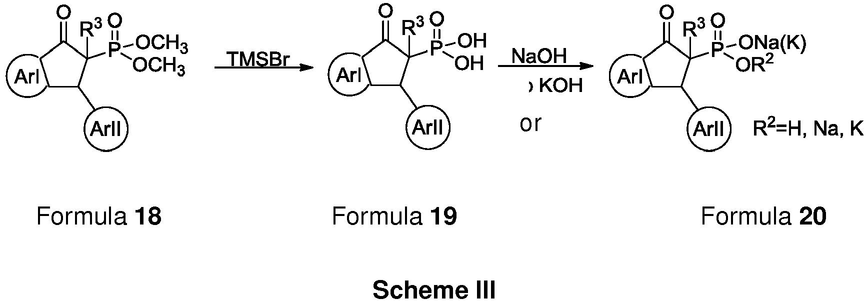

According to the invention, compounds represented by formulas **11** to **17** are prepared.

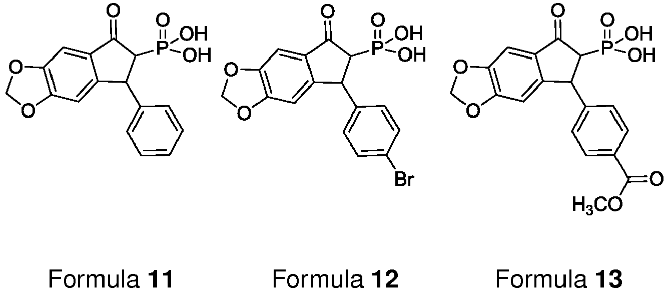

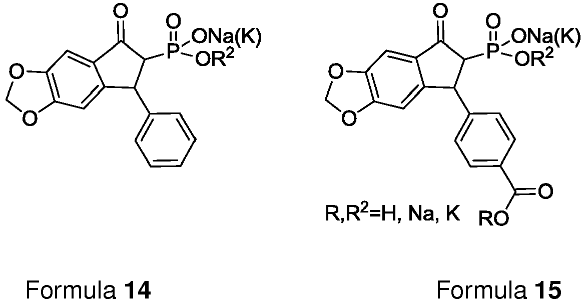

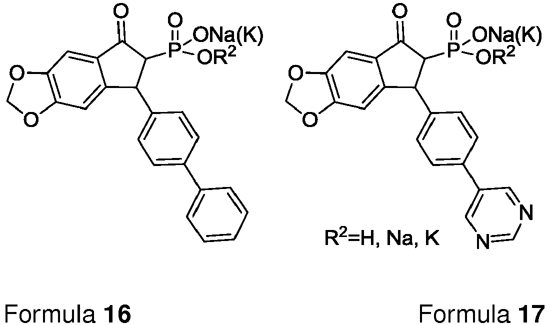

A method for preparation of 3-aryl-2-phosphoryl substituted 1-indanones of general formula **1,** wherein **R¹, R², R³, ArI** are as defined above, and **ArII** is biaryl containing aromatic or heteroaromatic rings 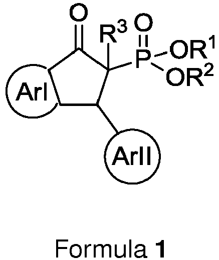 according to the invention, consists in the fact that a compound of general formula **23** is subjected to a coupling reaction, wherein **R³, ArI** are as defined above, and **R¹, R²** represent, methoxy groups, **ArII** represents an biaryl group **ArIII** - **ArIV** containing aromatic rings, substituted or unsubstituted, selected from the group consisting of benzene, naphthalene, pyrene, or six-membered heteroaromatic rings, substituted or unsubstituted, selected from the group consisting of pyridine, pyrimidine; or heteroaromatic rings, five-membered, substituted or unsubstituted, selected from the group consisting of thiophene, pyrrole or furan, under mild conditions, in an organic solvent, in a single reaction vessel, without isolation of the intermediate products, for the preparation of compounds of general formula **24,** wherein **R¹, R², R³,** and **ArI** are as defined above, and **ArIII** and **ArIV** are aromatic rings, substituted or unsubstituted, selected from the group consisting of benzene, naphthalene, pyrene, or six-membered heteroaromatic rings, substituted or unsubstituted, selected from the group consisting of pyridine, pyrimidine; or heteroaromatic rings, five-membered, substituted or unsubstituted, selected from the group consisting of thiophene, pyrrole or furan, 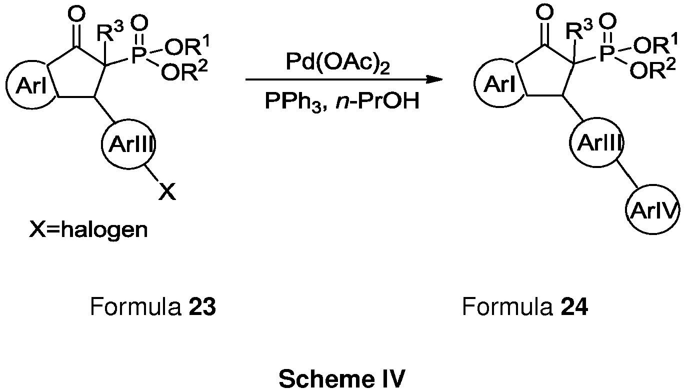 phosphonic esters represented by the formulas 21 and 22,

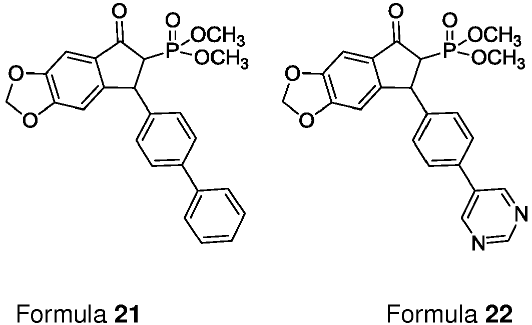

In the present invention, the compound of the formula **23** with methoxy groups (**R¹=R²**=Me), is subjected to the Suzuki-Miyaura coupling reaction using a catalyst: palladium acetate (Pd(OAc)₂) and triphenylphosphine (PPh₃) as ligand in the presence of aqueous sodium carbonate solution (Na₂CO₃), in an organic solvent, eg. n-propanol to afford biaryl derivatives **24,** wherein **R¹, R², R³, ArI** are as defined above and **ArII** represents biaryl containing two aromatic or heteroaromatic rings, in good yields, in a single reaction step.

A method for preparation of 3-aryl-2-phosphoryl substituted 1-indanones of general formula **1,** wherein **R¹, R², R³, ArI** are as defined above, and the **ArII** represents an aromatic ring substituted or unsubstituted, selected from the group consisting of benzene, naphthalene, pyrene, or six-membered heteroaromatic ring, substituted or unsubstituted, selected from the group consisting of pyridine, pyrimidine, or a heteroaromatic ring, five-membered, substituted or unsubstituted, selected from the group consisting of thiophene, pyrrole or furan 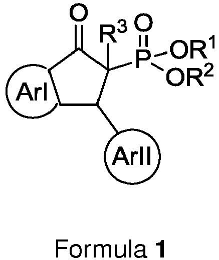 according to the invention, consists in the fact that a compound of general formula **25** is subjected to a reaction, wherein **R¹, R², R³, ArI** are as defined above and **ArIII** is an aromatic ring substituted or unsubstituted, selected from the group consisting of benzene, naphthalene, pyrene, or six-membered heteroaromatic ring, substituted or unsubstituted, selected from the group consisting of pyridine, pyrimidine, or a heteroaromatic ring, five-membered, substituted or unsubstituted, selected from the group consisting of thiophene, pyrrole or furan, under mild conditions in an inorganic solvent, in a single reaction vessel, without isolation of the intermediate products, for the preparation of compounds of general formula **27,** wherein **R¹, R², ArI** are as defined above and **ArIII** is an aromatic ring substituted or unsubstituted, selected from the group consisting of benzene, naphthalene, pyrene, or six-membered heteroaromatic ring, substituted or unsubstituted, selected from the group consisting of pyridine, pyrimidine, or a heteroaromatic ring, five-membered, substituted or unsubstituted, selected from the group consisting of thiophene, pyrrole or furan.

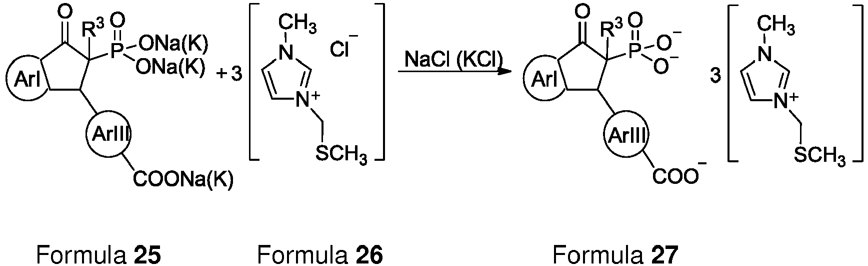

In the present invention, the compound of the formula **25** (**R¹=R²**=ONa, OK.; **R**=Na,K), is subjected to the exchange of sodium cations by *N*-methyl-*N-*methylthiomethyleneimidazolium cations in an organic solvent, eg. water and ethanol, to produce the compounds of general formula **27,** wherein **R³, ArI, ArIII** are as defined above and **ArIII** represent an aromatic ring substituted or unsubstituted, selected from the group consisting of benzene, naphthalene, pyrene, or six-membered heteroaromatic ring, substituted or unsubstituted, selected from the group consisting of pyridine, pyrimidine, or a heteroaromatic ring, a five-membered, substituted or unsubstituted, selected from the group consisting of thiophene, pyrrole or furan, in quantitative yields, in one step reaction.

The method of the invention has the following advantages:
(a) The process for preparation of 1-indanones is a simple, one-step process carried out in the presence of Lewis acids, eg. FeCl₃ and AlCl_{3.}
(b) In the present invention reaction is carried out at the reflux temperature of the solvent or at room temperature.
(c) The method according to the invention gives compounds in quantitative and good yields. Purification of the obtained compounds is carried out by column chromatography over silica gel, salts and phosphonic acids do not require purification.
(d) The method according to the invention gives compounds of type **1,** which contain an 1-indanone moiety, aromatic or heteroaromatic rings in position 3, phosphonate moiety in the form of an ester, acid, mono or disalt in position 2 and/or hydrogen and fluorine atom in position 2.

The following are examples of the invention.

### EXAMPLE I The general procedure for the synthesis of compounds of formulas 2 and 4:

To a solution of the appropriate compound of general formula **5** (0.05 g, 0.114 mmol) in methylene chloride, anhydrous ferric chloride FeCl₃ (0.08 g, 0.228 mmol) was added. The mixture was heated for 4 hours at reflux. The mixture was then washed three times with water, the organic layer was dried over MgSO₄ and evaporated. The product was purified by column chromatography over silica gel. The compounds of formulas **2** and **4** were obtained.

### EXAMPLE II The general procedure for the synthesis of compound of the formula 3:

To a solution of the appropriate compound of general formula **5** (0.38 g, 1.15 mmol) in toluene (100 mL), anhydrous aluminum chloride AlCl₃ (0.31 g, 2.30 mmol) was added. The mixture was stirred for 20 hours at room temperature. The mixture was then washed three times with water; the organic layer was dried over MgSO₄ and evaporated. The product was purified by column chromatography on silica gel. The compound of formula **3** was obtained.

### EXAMPLE III The general procedure for the synthesis of compounds of formulas 6-8:

To a suspension of NaH in THF, 1-indanone **3** was added (0.10 g, 0.23 mmol) and stirred at 0°C for one hour followed by addition of (N-fluorobenzenesulfonimide) **NFSI** (0.07g, 0.23 mmol), allowed to warm to room temperature and stirred overnight. The mixture was then washed three times with water; the organic layer was dried over MgSO₄ and evaporated. The product was purified by column chromatography over silica gel. In this manner, fluorinated 1-indanones of the formulas **6-8** were obtained.

### EXAMPLE IV The general procedure for the synthesis of compounds of formulas 11-13, 14 and 15,16 and 17:

To a solution of the appropriate 1-indanone **2-4** (0.30 g, 0.69 mmol) in methylene chloride, trimethylbromosilane (TMSBr) (1.06 g, 6.90 mmol) was added and the resulting mixture was heated at reflux for 4 hours. Then methanol was added in a ratio of 1:3 to the methylene chloride used and heated for an additional hour. The reaction mixture was evaporated using evaporator and oil pump in order to remove residues of TMSBr. The pure products **11-13** were obtained in quantitative yields. The compounds **11-13** were then stirred for two hours at room temperature with an equimolar or two-fold amount of NaOH or KOH in water and THF, in a 1:1 ratio. After evaporation of the solvents, the products **14** and **15** were obtained in quantitative yield. Salts **16** and **17** were obtained via hydrolysis of esters **21** and **22** to the appropriate phosphonic acids without isolation.

### EXAMPLE V The general procedure for the synthesis of compounds of formulas 21 and 22:

To a solution of the appropriate 1-indanone **3** (0.33 g, 0.87 mmol), a catalyst Pd(OAc)₂ in an amount of 5% (0.01 g, 0.04 mmol), triphenylphosphine (0.23 g, 0.87 mmol), 2-pyrimidylboronic acid (0.14 g, 1.13 mmol), Na₂CO₃ (0.14 g, 1.30 mmol) dissolved in 0.65 mL of water and 150 mL n-PrOH were added, and further heated at reflux for 5 hours. Then the reaction mixture was poured into 100 mL of water, washed two times with diethyl ether. The combined organic layers were washed with brine and then again with water (100 mL), dried over MgSO₄, evaporated and purified by column chromatography using ethyl acetate: petroleum ether (40/60) as an eluent. The pure products **21** and **22** were obtained.

### EXAMPLE VI The general procedure for the synthesis of compound of formula 27:

To the appropriate salt **15** (**R, R¹, R²**=Na, K) (0.04 g, 0.045 mmol) was added the ionic liquid **26** (0.048 g, 0.136 mmol) dissolved in 5 mL of ethanol, followed by dropwise addition of 5 mL of water. The mixture was stirred for 2 hours. After removal of the solvents, the product **27** was obtained in quantitative yield.

The course of individual reactions is shown in Schemes **I, II** and **III.**

Following the above procedures, there were afforded compounds, whose spectroscopic data are summarized in **Table 1.**

**Table 1**

| Compound | ¹HNMR[ppm] 200MHz,CDCl₃ | ¹³CNMR[ppm] 50MHz,CDCl₃ | MS(Cl, El or FAB): m/z(%) |
|---|---|---|---|
| **2** | 3.22 (dd, J³_{HH}=3.38 Hz, J²_{PH}=26.05 Hz, 1H, HCP), 3.75 3.80 (2×d, J³_{HH}=8.00 Hz, J³_{PH}=10.30 i 10.60 Hz, 6H, 2×OCH₃), 4.78 (dd, J³_{HH}=3.35 Hz, J³_{PH}=12.40 Hz, 1H, HCHCP), 6.06 (s, 2H, OCH₂O), 6.59 (s, 1H, ArH) 7.04-7.33 (m, 6H, ArH) | 46.71 (s, OCH₃), 53.91 (d, ¹J_{PC}=106,5 Hz, CHP), 53.43 (d, CHP, ²J_{PC}=44,85 Hz), 102.43 (s, OCH₂O), 105.4 i 105.8 (s, 2×CH), 127.5 (s, Ar) 127.65 (s, Ar) 128.16 (s, Ar) 130.9 (s, OCC), 142.2 (s, CCHCHP), 149.1 (s, CCHPh), 154.16 i 155.04 (2×s, OCH₂OC×2), 196.5 (s, C=O) | MS-Cl: 361 (100, M⁺·+ 1) |
| **3** | 3.15 (dd, J³_{HH}=3.50 Hz, J²_{PH}=25.80 Hz, 1H, HCP), 3.75 i 3.79 (2×d, J³_{PH}=11-10 i 11.20 Hz, 6H, 2×OCH₃), 4.74 (dd, J³_{HH}=3.00 Hz, J³_{PH}=15.60 Hz, 1H, HCHCP), 6.06 (s, 2H, OCH₂O), 6.55 (s, 1H, ArH) 6.97 (s, 1H, ArH), 7.01 (s, 1H, ArH), 7.13 (s, 1H, ArH) 7.40 (s, 1H, ArH), 7.44 (s, 1H, ArH), | 29.68 (s, CHCHP), 46.11 (s, CHP), 52.93 (s, OCH₃), 56.56 (s, OCH₃) 102.37 (s, OCH₂O), 102.67 (s, CHCCC=O), 105,65 (s, CHCC=O), 129.40 (s, CHCHCBrx2) 132.15 (s, CHCBr×2) 141.21 (s, CC=O), 149.23 (s, CCC=O) 153.43 (s, OCH₂OC), 155.15 (s, COCH₂O), 195.97 (s, C=O) | MS-Cl:440 (36,M⁺ (⁸⁰Br)), 438 (36, M⁺· (⁷⁹Br), 330 (100,M⁺P(O)(OCH ₃)₂), (⁸⁰Br)), 328 (100, M⁺·-P(O)(OCH₃)₂), (⁷⁹Br)) |
| **4** | 3.22 (dd, J³_{HH}=3.50 Hz, J²_{PH}=25.70 Hz, 1H, HCP), 3.73 i 3.81 J³_{HH}=6.50 Hz, J³_{PH}=9.60 i 9.60 6H, 2×OCH₃), 3.88 (s, 3H, OCH₃), 4.83 (dd, J³_{HH}=3.60 Hz, J³_{PH}=15.70 Hz, 1H, HCHCP), 6.06 (s, 2H, OCH₂O), 6.54 (s, 1H, ArH), 7.14 1H, ArH), 7.16 (s, 1H, ArH), 7.21 1H, ArH) 7.94 (s, 1H, ArH), 7.98 (s, 1H, ArH) | 23.81 (s, CHPh), 46.54 (s, C(O)OCH₃), 52.17 (s, CHP), 53.38 (d, POCH3), 56.03 (d, POCH3), 102.44 (s, OCH₂O), (s, CHCCC(O)), 105.65 (s, 127.75 (s, o-CH z Ar) 129.43 CC(O)), 130.31 (s, m-CH z Ar2), 147.25 (s, CCC(O)) 149.27 (s, COCH₂O), 153.30 (s, C1 z Ar2) 155.16 (s, OCH₂OC) 166.58 (s, C(O)OCH₃) 195.87 (s, C=O) | 419 (100, M⁺· + 1) |
| **6** | 3.23 (d, J³_{PH}=10.9 Hz, 3H, P(O)OCH₃), 3.74 (d, J³_{PH}=10.7 Hz, 3H, P(O)OCH₃), 4.64-4.83 (dd, J³_{PH}=13.5 Hz, J³_{FH}=24.9 Hz, 1H, CHCF), 6.11 (s, 2H, OCH₂O) 6.72 (s, 1H, ArH) 7.20 (s, 1H, ArH), 7.35-7.45 (5H, ArH) | 52.20 (s, CHCF), 54.50 (d, P(O)OCH₃), 99.90 (s, OCH₂O), 102.70 (s, CHCCC(O)), 105.82 (s, CHCC(O)), 128.33 (s, o-CH z Ar), 129.44 (s, p-CH z Ar), 129.81 (s, m-CH z Ar), 130.69 (s, CF), 136.45 (s, C1 z Ar), 182.15 (s, COCH₂O), 184.20 (s, OCH₂OC), 200.40 (s, C(O)). | MS-Cl: 379 (100, M⁺· +1), 358 (22, M⁺· - HF) |
| **7** | 3.30 (d, J³_{PH}=10.6 Hz, 3H, P(O)OCH₃), 3.72 (d, J³_{PH}=11.1 Hz, 3H, P(O)OCH₃), 4.57-4.76 (dd, J³_{PH}=11.6 Hz, J³_{FH}=25.3 Hz, 1H, CHCF), 6.09 (s, 2H, OCH₂O) 6.63 (s, 1H, ArH) 7.15-7.52 (5H, ArH) | 53.28 (s, CHCF), 54.86 (d, P(O)OCH₃), 100.67 (s, OCH₂O), 102.88 (s, CHCCC(O)), 105.52 (s, CHCC(O)), 122.30 (s, o-CH z Ar), 127.35 (s, p-C z Ar), 127.46 (s, m-CH z Ar), 131.34 (s, CF), 133.29 (s, C1 z Ar), 149.47 (s, COCH₂O), 155.75 (s, OCH₂OC), 192.75 (s, C(O)). | MS-Cl:458 (24,M⁺ +1,(⁸⁰Br)),456 (24, M⁺· +1, (⁷⁹Br)), 438 (88, M^{+.} -F, (⁸⁰Br)), 436 (86, M⁺· -F, (⁷⁹Br)),348(M⁺-P(O)(OCH₃)₂, (⁸⁰Br) 346 (100, M⁺- P(O) (OCH₃)₂, (⁷⁹Br)), |
| **8** | 3.23 (d, J³_{PH}=11.1 Hz, 3H, P(O)OCH₃), 3.71 (d, J³_{PH}=10.6 Hz, 3H, P(O)OCH₃), 3.90 (s, 3H, pOCH₃), 4.66-4.86 (dd, J³_{PH}=13.1 Hz, J³_{FH}=25.3 Hz, 1H, CHCF), 6.10 (s, 2H, OCH₂O) 6.63 (s, 1H, ArH) 7.18 (s, 1H, ArH), 7.48 (d, J³_{HH}=8.6 Hz, 2H, ArH), 8.05 (d, J³_{HH}=8.6 Hz, 2H, ArH) | 52.15 (s, CHCF), 54.54 (d, P(O)OCH3), 99.80 (s, OCH₂O), 100.87 (s, CHCCC(O)), 105.62 (s, CHCC(O)), 128.66 (s, o-CH z Ar), 129.41 (s, CC(O)OCH₃), 129.94 (s, m-CH z Ar), 140.64 (s, CF), 148.81 (s, C1 z Ar), 149.53 (s, COCH₂O), 155.76 (s, OCH₂OC), 166.65 (s, C(O)OCH₃), 192.83 (s, C(O)). | MS-El: 436 (M⁺·), 416 (100, M⁺· - HF_{,}), 326 (80, M⁺· - H; - P(O)(OCH₃)₂) |
| **11** | 3.68 (bs, 1H, CHCHP), 4.84 (bs, 1H, CHP), 6.06 (bs, 2H, OCH₂O), 6.57 (s, 1H, ArH) 7.20 (bs, 6H, ArH), 9.94 (bs, 2H, OH) | 45.76 (s, CHPh), 56.50 (s, CHP), 100.37 (s, OCH₂O), 101.9 (s, CHCCC(O)) 104.83 (s, CCHCC(O)), 125.99 (s, p-C z Ph) 126.60 (s, o-C z Ph) 127.89 (s, m-C z Ph), 129.85 (s, CCHCC(O)), 142.52 (s, CHCCC(O)), 147.74 (s, CCHCHP) 152.95 (s, CCHCC(O)), 153.37 (s, CCHCCC(O)) 196.76 (s, C=O) | MS-Cl: 333 (7, M⁺· + 1), 253 (100) |
| **12** | 3.29 (d, 1H, J²_{PH}=25.8 Hz, CHP,), 4.71 (d, J³_{PH}=15.2, 1H, CHCHP), 6.01 (s, 2H, OCH₂O), 6.50 (s, 1H, ArH) 6.88-7.26 (5H, ArH), 9.36 (bs, 2H, OH) | 44.81 (s, CHCHP), 45.79 (s, CHP), 101.12 (s, OCH₂O), 101.94 (s, CHCCC=O), 104.64 (s, CHCC=O), 120.00 (s, CHCHCBr×2) 128.44 (s, CHCBr×2) 129.20 (s, CBr) 130.70 (s, C1 z Ar) 139.45 (s, CCC(O)), 140.41 (s, CC(O)) 147.92 (s, OCH₂OC), 153.50 (s, COCH₂O), 154.54 (s, C=O) | MS-Cl: 332 (100, M⁺· - P(O)(OCH₃)₂, (⁸⁰Br)), 330 (100, M⁺· - P(O)(OCH₃)₂, (⁷⁹Br)), |
| **13** | 3.24 (dd, J³_{PH}=25.8 Hz, J³_{HH}=1.5 Hz, 1H, CHCHP), 3.82 (s, 3H, P(O)OCH₃), 4.82 (dd, J³_{HH}=2.1 Hz, J²_{PH}=15.2 Hz, 1H, CHCP), 6.00 (s, 2H, OCH₂O), 6.49 (s, 1H, ArH) 6.90 (s, 1H, ArH), 7.12 (s, 1H, ArH), 7.16 (s, 1H, ArH), 7.82 (s, 1H, ArH) 7.85 (s, 1H, ArH), 8.20 (s, 2H, OH) | 30.92 (s, CHPh) 46.33 (s, OCH₃), 52.26 (s, CHP), 102.36 (s, OCH₂O), 103.21 (s, CHCCC(O)), 105.87 (s, CHCC(O) 127.95 (s, o-CH z Ar) 129.03 (s, CC(O)), 130.21 (s, m-CH z Ar2), 146.78 (s, CCC(O)) 149.23 (s, COCH₂O), 155.00 (C1 z Ar2) 155.81 (s, OCH₂OC) 166.78 (s, C(O)OCH₃) 207.34 (s, C=O) | MS-Cl: 391 (3, M⁺· + 1), 311 (100, M⁺· - P(O)(OH)₂) |
| **14** (R²= Na) | 1.83 (s, 1H, CHCHP), 2.98 (d, 1H, J²_{PH}=23.6 Hz, CHP), 5.99 (d, 2H, J²_{HH}=7.6 Hz, OCH₂O), 6.68 (s, 1H, ArH) 7.05-7.53 (m, 6H, ArH), | 47.48 (s, CHPh) 52.50 (s, CHP), 100.28 (s, OCH₂O), 101.26 (s, CHCCC(O)), 104.50 (s, CHCC(O) 125.52 (s, p-CH z Ar2) 126.28 (s, m-CH z Ar2), 127.62 (s, o-CH z Ar2), 145.20 (C1 z Ar2) 147.06 (s, COCH₂O), 153.40 (s, OCH₂OC) 155.50 (s, C=O) | MS (FAB - VE - LMR): 368 (8), 276 (24), 184 (67), 183 (100); MS (FAB + VE + LMR): 139 (12), 133 (33), 117 (100) |
| **15** (R=R²= Na) | 2.92 (dd, J²_{PH}=23.3 Hz, J³_{HH}=1.5 Hz, 1H, CHP), 4.63-4.69 (dd, (sygnal od D₂O) 1H, CHCP), 5.93 (d, J²_{HH}=9.1 Hz, 2H, OCH₂O), 6.60 (s, 1H, ArH) 6.97 (s, 1H, ArH) 7.08 (d, J³_{HH}=8.1 Hz, 2H, ArH), 7.63 (d, J³_{HH}=8.1 Hz, 2H, ArH), | 48.52 (s, OCH₃), 101.54 (s, OCH₂O), 102.52, 105.79, 127.34 (s, o-CH z Ar), 129.28 (m-CH z Ar), 130.93 (s, p-C z Ar), 134.45 (s, C1 z Ar), 147.64 , 148.40, 154.65, 156.09, 166.95, 175.38 (s, C(O)OCH₃) 206.42 (s, C=O) | MS (FAB - VE - LMR): 398 (25), 255 (35), 184 (100); MS (FAB + VE + LMR): 212 (18), 173 (17), 139 (36), 118(100) |
| **21** | 3.13-3.32 (2×dd, J²_{PH}=25.8 Hz, J³_{HH}=3.6 Hz, 1 H, CHP), 3.69-3.84 (m, 3H, P(O)OCH₃), 3.77 (2xdd, J³_{PH}=11.2 Hz, J³_{HH}=3.6 Hz, 1H, CHCHP), 6.03 (d, 2H, OCH₂O) 6.59 (d, 1H, ArH) 7.07-7.68 (m, 10H, ArH) | 29.71 (s, CHPh), 46.37 i 46.70 (s, CHP), 52.95 i 53.96 (d, OCH₃), 54.90 i 57.59 (d, OCH₃) 102.28 i 102.32 (s, OCH₂O), 102.59 (s, CHCHCC(O)), 105.81 i 105.84 (s, CHCC(O)), 127.02 (s, m-CH z Ar1), 127.42 i 127.65 (s, ArC), 128.46 (s, CC(O)), 128.70 (s, ArC), 128.80 i 129.02 (s, CCC(O)), 131.99 (s, ArC) 132.10 (s, CHCHP), 132.16 (s, ArC), 132.19 (s, ArC), 140.47 (s, COCH₂O), 149.14 (s, OCH₂OC)), 189.68 (s, C(O)) | MS-El: 436.2 (34, M⁺·), 326.1 (100, M⁺· - H; - P(O)(OCH₃)₂) |
| **22** | 3.19 (dd, J²_{PH}=26.3 Hz, J³_{HH}=3.5 Hz, 1H, CHP), 3.74 (d, J³_{PH}=11.1 Hz, 3H, P(O)OCH₃), 3.77 (d, J³_{PH}=10.6 Hz, 3H, P(O)OCH₃), 4.80 (dd, J³_{PH}=15.7 Hz, J³_{HH}=3.6 Hz, 1H, CHCHP), 6.03 (s, 2H, OCH₂O) 6.57 (s, 1H, ArH) 7.10 (s, 1H, ArH), 7.26 (s, 1H, ArH), 7.46 (s, 1H, ArH), 7.50 (s, 1ArH) 8.86 (s, 2H, CCHN), 9.13 (s, 1H, NCHN) | 29.11 (s, CHPh), 46.11 (s, CHP), 53.23 (d, OCH₃), 55.90 (d, OCH₃) 102.12 (s, OCH₂O), 102.52 (s, CHCHCC(O)), 105.48 (s, CHCC(O)), 127.40 (s, m-CH z Ar1), 128.60 (s, o-CH z Ar1), 130.71 (s, CC(O)), 133.24 (s, CCHN), 133.46 (s, CCC(O)), 143.06 (s, CHCHP), 149.03 (s, COCH₂O), 154.56 (s, CCHN), 154.97 (s, OCH₂OC)), 157.29 (s, NCHN), 195.73 (s, C(O)) | MS-El: 438 (30, M⁺·), 328.1 (100, M⁺· - H; - P(O)(OCH₃)₂) |
| **27** | 1.98 (s, 9H, SMe), 3.30-3.46 (m, 1H, CHP(O)), 4.51-4.75 (sygnal od D₂O, 1H, CHCHP), 5.10 (s, 6H, NCH₂), 5.95 (d, J²_{HH}=5.10 Hz, 2H, OCH₂O), 6.61 (s, 1H, ArH) 7.00-7.79 (m, 10H, 4H_{ArH} i 6H_{CH=CHimidazol}), 8.76 (s, 3H, NCHN) | | MS (FAB - VE - LMR): 425.1 (100), 404.2 (58), 339.3 (64), 325.3 (84), 311.3 (42) MS (FAB + VE + LMR): 144.0 (100), 143 (45), |

### Literature:

1. V. Gevorgyan, L. G. Quan, Y. Yamamoto, Tetrahedron Lett. 1999, 4089-4092
2. A. Saito, M. Umakoshi, N. Yagyu, Y. Hanzawa, Org. Lett., 2008, 10, 1783-1785
3. N. Ahmed, B. V. Babu, H. Kumar, Synthesis, 2011, 15, 2471-2477
4. [45] Y. Shao, C. Yang, W. Gui, Y. Liu, W. Xia, Chem. Commun., 2012, 48, 3560-3562
5. J. Nie, H.-W. Zhu, H.-F. Cui, M.-Q. Hua, J.-A. Ma, Org. Lett., 2007, 9, 3053-305
6. N. J. Lawrence, E. S. M. Armitage, B. Greedy, D. Cook, S. Ducki, A. T. McGown, Tetrahedron Lett., 2006, 47, 1637-1640
7. T. Vaidya, A. C. Atesin, I. R. Herrick, A. J. Frontier, R. Eisenberg, Angew. Chem. 2010, 122, 3435-3438
8. D. G. Nagle, Y. Zhou, P. U. Park, J. Nat. Prod., 2000, 63, 1431
9. J. Cossy, D. Belotti, A. Magur, Synlett, 2003, 1515
10. H. Yu, I. J. Kim, J. E. Folk, J. Med. Chem., 2004, 47, 2624
11. L. M. Finkielsztein, E. F. Castro, L. E. Fabian, Eur. J. Med. Chem. 2008, 1767-1773
12. Diego Santos, Beatriz Parajón-Costa, Miriam Rossic, Francesco Caruso, Diego Benítez, Javier Varela, Hugo Cerecetto, Mercedes González, Natalia Gómez, Maria E. Caputto, Albertina G. Moglioni, Graciela Moltrasio, Liliana M. Finkielsztein, Dinorah Gambino, J. Inorg. Bochem, 117 (2012) 270-276
13. J. Petrignet, T. Roisnel, R. Gree, Chem. Eur. J. 2007, 13, 7374-7384

## Claims

1. A process for preparation of 3-aryl-2-phosphoryl substituted 1-indanones of the general formula **1,** 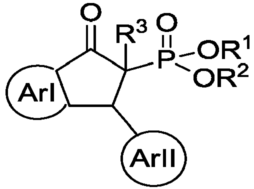
wherein **R¹** and **R²** - are the same or different and represent hydrogen atoms, metal atoms, sodium or potassium, or alkyl group containing 1-10 carbon atoms,
**R³** - represents a hydrogen atom or a fluor atom, and **ArI** and **ArII** are the same or different and represent an aromatic ring or biaryl in the case of ArII containing aryl rings, substituted or unsubstituted, selected from the group consisting of benzene, naphthalene, pyrene, or six-membered heteroaromatic rings, substituted or unsubstituted, selected from the group consisting of pyridine, pyrimidine, or heteroaromatic rings, five-membered, substituted or unsubstituted, selected from the group consisting of thiophene, pyrrole or furan, **characterized in that** the cyclization reaction of esters of general formula **5** is carried out: 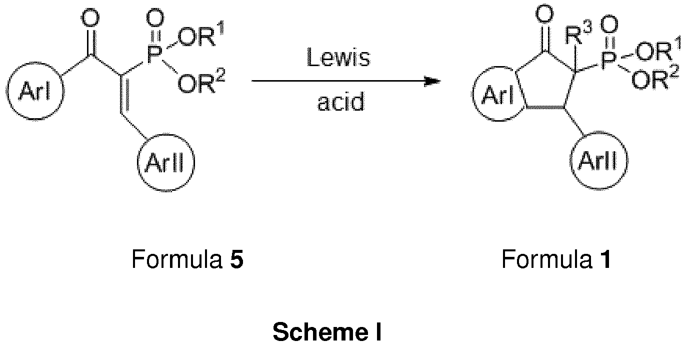
wherein **R¹, R²**, **ArI** and **ArII** are as defined above in the presence of a Lewis acid, eg. FeCl₃ and AlCl₃ under mild conditions, in an organic solvent, in a single reaction vessel, without isolation of intermediate products, for the preparation of compounds of formula **1,** wherein **R¹, R²**, **ArI** and **ArII** are as defined above and **R³** is a hydrogen atom, eg. compounds represented by the formulas **2, 3** or **4,** as shown in Scheme **I.**

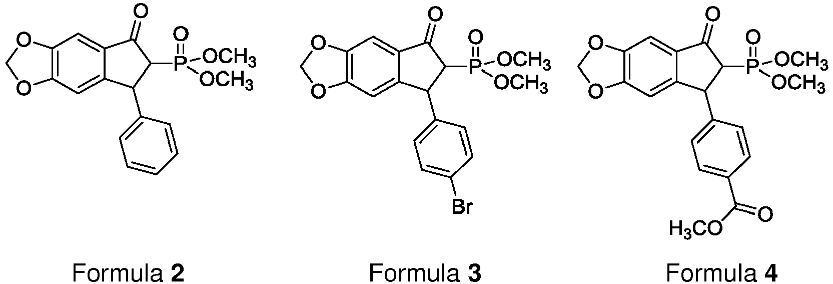

2. A method according to claim 1, **characterized in that** the compound of general formula **5** with methoxy groups (**R¹=R²=**Me) is cyclized in the presence of a Lewis acid, eg. FeCl₃ and AlCl₃, in an organic solvent, eg. toluene or methylene chloride, to obtain compounds of formula **1** in good yields, in a single reaction step.

3. A method according to claim 1, **characterized in that** the 3-aryl-2-phosphoryl substituted 1-indanones of general formula **1,** wherein **R¹, R², ArI** and **ArII** are as defined above, and **R³** is fluorine, are prepared by fluorination reaction with a compound of general formula **9,** wherein **R¹, R², ArI** and **ArII** are as defined above, in a position α, in the presence of *N*-fluorobenzenesulfonimide **(NFSI),** under mild conditions, in an organic solvent, in a single reaction vessel, without isolation of the intermediate products, for the preparation of compounds of general formula **10,** wherein **R¹, R², ArI** and **ArII** are as defined above, and **R³**=F,

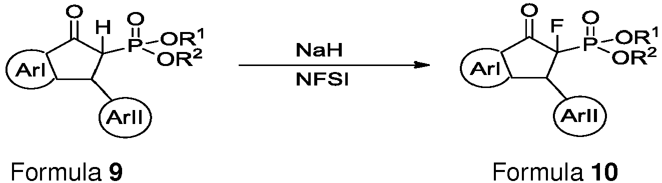

4. A method according to claim 3 for the production of esters represented by the formulas **6, 7** or **8.**

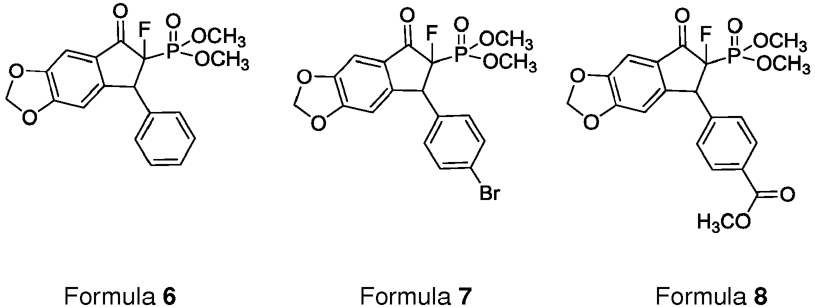

5. A method according to claim 1, **characterized in that**, in order to obtain 3-aryl-2-phosphoryl substituted 1-indanones of general formula 1, wherein **ArI, ArII** and **R³** are as defined above and **R¹** and **R²** are the same or different and represent hydrogen atoms or a metal atom, eg. sodium or potassium, compounds of general formula **18,** wherein **R¹**=**R²**=Me, and **R³** is as defined above, are subjected to hydrolysis reaction in the presence of trimethylsilyl bromide TMSBr, in an organic solvent, eg. a mixture of methylene chloride and methanol, then using alkali, eg. sodium or potassium hydroxide, the transformation of the resulting acids of general formula **19** into a mono or disalts of general formula **20** is carried out, 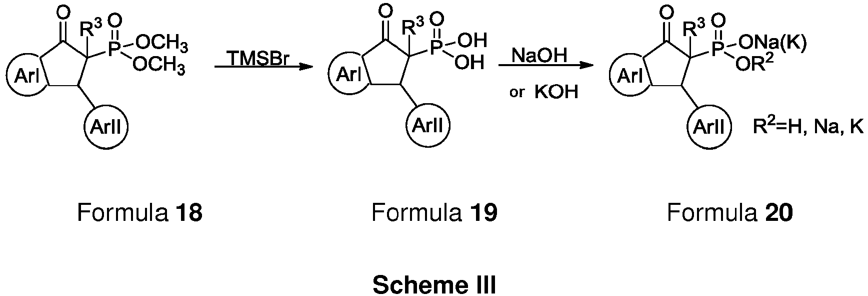 into the compounds represented by formulas **11** to **15**

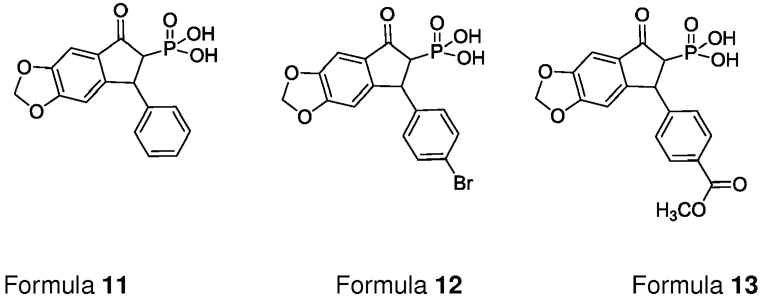

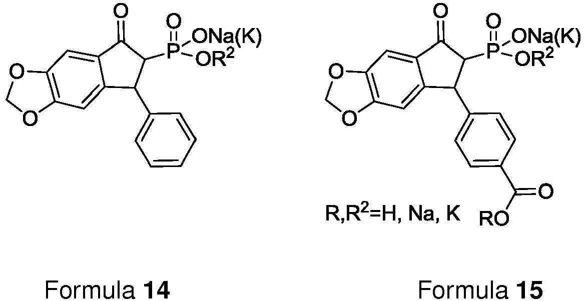

6. A method according to claim 1, **characterized in that** the 3-aryl-2-phosphoryl substituted 1-indanones of the general formula **1,** wherein **R¹, R², ArI** are as defined above, and the **ArII** represents biaryl containing aromatic rings, are obtained by coupling of a compound of general formula **23** with aryl(IV) boronic acid, wherein **R¹, R², ArI** are as defined above, and **ArIII, ArIV** are aromatic rings, substituted or unsubstituted, selected from the group consisting of benzene, naphthalene, pyrene, or six-membered heteroaromatic rings, substituted or unsubstituted, selected from the group consisting of pyridine, pyrimidine; or heteroaromatic rings, five-membered, substituted or unsubstituted, selected from the group consisting of thiophene, pyrrole or furan, under mild conditions, in an organic solvent, in a single reaction vessel, without isolation of the intermediate products, for the preparation of compounds of general formula **24,** wherein **R¹, R², ArI, ArIII** and **ArIV** are as defined above.

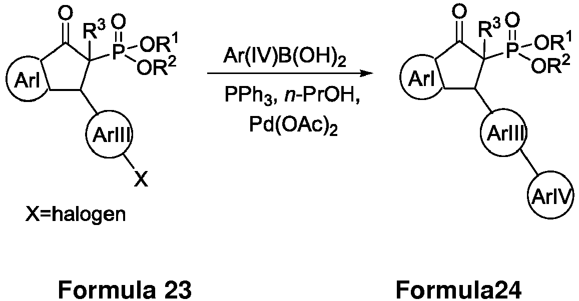

7. A process according to claim 6, **characterized in that** the compound of formula 24 is an esters represented by the formulas **21** and **22**

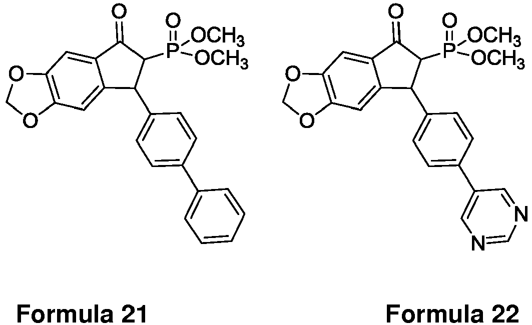

8. A process according to claim 1, **characterized in that** the compound of formula **25,** wherein **R¹, R², R³, ArI** are as defined above, and **Arlll** is an aromatic ring substituted or unsubstituted, selected from the group consisting of benzene, naphthalene, pyrene, or six-membered heteroaromatic ring, substituted or unsubstituted, selected from the group consisting of pyridine, pyrimidine, or a heteroaromatic ring, five-membered, substituted or unsubstituted, selected from the group consisting of thiophene, pyrrole or furan, is under mild conditions, coupled with a compound of general formula **26** in an inorganic solvent, in a single reaction vessel, without isolation of the intermediate products, for the preparation of the compounds of general formula **27,** wherein **R¹, R², ArI** are as defined above and **Arlll** is an aromatic ring substituted or unsubstituted, selected from the group consisting of benzene, naphthalene, pyrene, or six-membered heteroaromatic ring, substituted or unsubstituted, selected from the group consisting of pyridine, pyrimidine, or a heteroaromatic ring, five-membered, substituted or unsubstituted, selected from the group consisting of thiophene, pyrrole or furan.

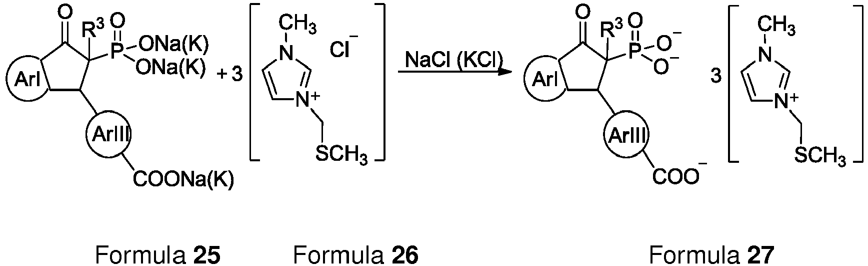

## Patentansprüche

1. Ein Verfahren zur Herstellung von 3-Aryl-2-phosphoryl-substituierten 1-Indanonen der allgemeinen Formel 1, 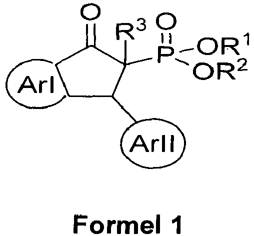 worin **R¹** und **R²** - gleich oder verschieden sind und Wasserstoffatome, Metallatome, Natrium oder Kalium oder eine Alkylgruppe mit 1-10 Kohlenstoffatomen bedeuten, **R³** - ein Wasserstoffatom oder ein Fluoratom bedeutet, und **ArI** und **Arll** gleich oder verschieden sind und einen aromatischen Ring oder Biaryl im Falle von ArII enthaltenden Arylringen bedeuten, substituiert oder unsubstituiert, ausgewählt aus der Gruppe bestehend aus Benzol, Naphthalin, Pyren oder sechsgliedrigen heteroaromatischen Ringen, substituiert oder unsubstituiert, ausgewählt aus der Gruppe bestehend aus Pyridin, Pyrimidin oder heteroaromatische Ringe, 5-gliedrig, substituiert oder unsubstituiert, ausgewählt aus der Gruppe bestehend aus Thiophen, Pyrrol- oder Furan, **dadurch gekennzeichnet, daß** man die Cyclisierungsreaktion von Estern der allgemeinen Formel **5** durchführt: 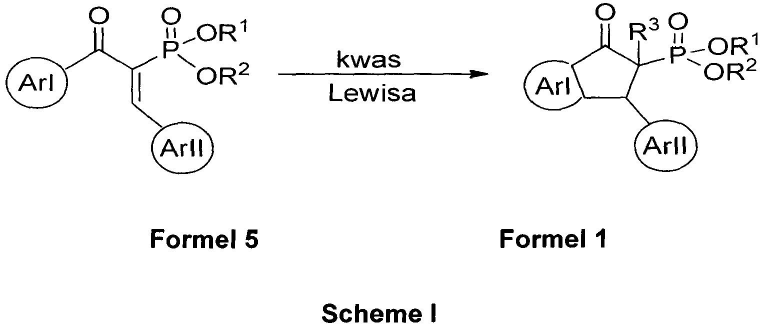 worin **R¹, R², ArI** und **ArII** wie oben definiert sind, in Gegenwart einer LewisSäure, z. B. FeCl₃ and AlCl₃ unter milden Bedingungen in einem organischen Lösungsmittel in einem einzigen Reaktionsgefäß ohne Isolierung von Zwischenprodukten zur Herstellung von Verbindungen der Formel**1**, worin **R¹, R², Arl** und **Arll** wie oben definiert sind und **R³** ein Wasserstoffatom ist, z. B. Verbindungen der Formeln **2, 3** or **4**, wie in Schema I dargestellt.

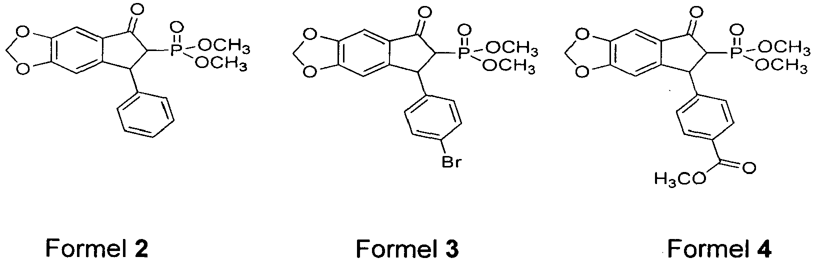

2. Verfahren nach Anspruch 1, **dadurch gekennzeichnet, daß** man die Verbindung der allgemeinen Formel **5** mit Methoxygruppen (**R¹**=**R²**=Me) in einem organischen Lösungsmittel, z. B. Toluol- oder Methylenchlorid, um Verbindungen der Formel **1** in guter Ausbeute in einem einzigen Reaktionsschritt zu erhalten.

3. Verfahren nach Anspruch 1, **dadurch gekennzeichnet, daß** man die 3-Aryl-2-phosphoryl-substituierten 1-Indanone der allgemeinen Formel **1,** worin **R¹, R², ArI** und **ArII** wie oben definiert sind und **R³** ist, durch Fluorierungsreaktion mit einer Verbindung der allgemeinen Formel **9,** wohin **R¹, R²**, **ArI** und **ArII** wie oben definiert sind, in einer Position? in Gegenwart von N-Fluorbenzolsulfonimid **(NFSI),** unter milden Bedingungen in einem organischen Lösungsmittel in einem einzigen Reaktionsgefäß, ohne Isolierung der Zwischenprodukte, zur Herstellung von Verbindungen der allgemeinen Formel **10,** wohin **R¹, R², ArI** and **ArII** wie oben definiert sind und **R³**=F, 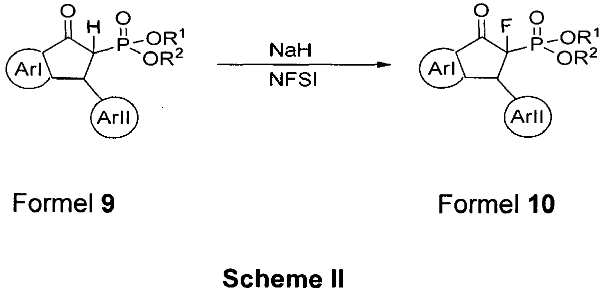 dargestellt durch die Formeln **6, 7** oder **8.**

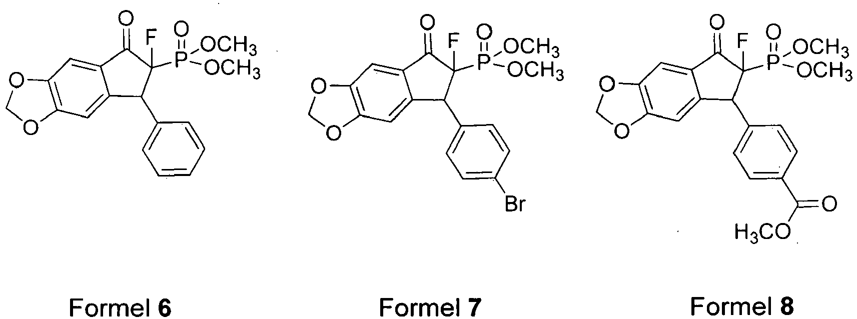

4. Verfahren nach Anspruch 1, **dadurch gekennzeichnet, daß** man zur Gewinnung von 3-Aryl-2-phosphoryl-substituierten 1-Indanonen der allgemeinen Formel 1, worin **ArI, ArII** und **R³ wie** oben definiert sind und **R¹** und **R²** gleich oder verschieden sind und Wasserstoffatome oder ein Metallatom, z. B. Natrium oder Kalium, Verbindungen der allgemeinen Formel **18,** wohin **R¹**=**R²**=Me, und **R³** wie oben definiert ist, in Gegenwart von Trimethylsilylbromid TMSBr in einem organischen Lösungsmittel, z. B. eine Mischung aus Methylenchlorid und Methanol, dann unter Verwendung von Alkali, z. B. Natrium- oder Kaliumhydroxid, die Umwandlung der resultierenden Säuren der allgemeinen Formel **19** in ein Mono- oder Disalze der allgemeinen Formel **20** erfolgt, 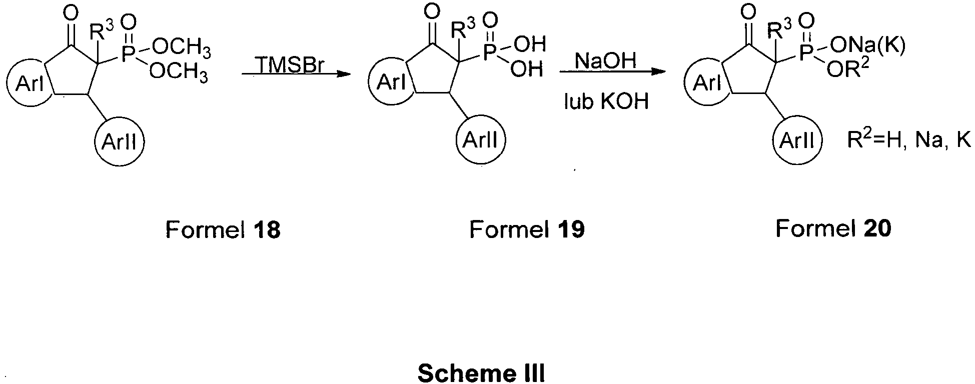 in die Verbindungen der Formel **11** to **15**

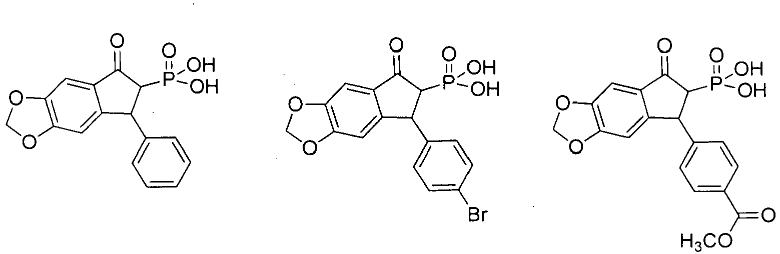

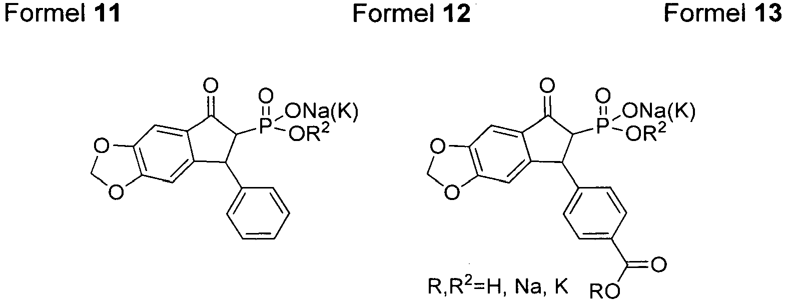

5. Verfahren nach Maßgabe von Anspruch 1, **dadurch gekennzeichnet, daß** man die 3-Aryl-2-phosphoryl-substituierten 1-Indanone der allgemeinen Formel **1,** worin **R¹, R², ArI** wie oben definiert sind und **ArII** für biarylhaltige aromatische Ringe steht, durch Kuppeln einer Verbindung der allgemeinen Formel **23** 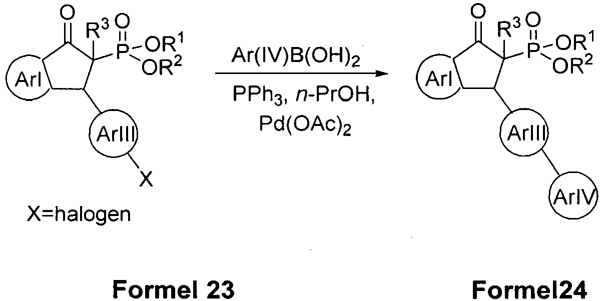 mit Aryl (IV)-boronsäure erhält, worin **R¹, R², ArI** boronsäure erhält, worin **ArIII, ArIV** wie oben definiert sind und, wie oben definiert sind und, Pyrrole oder Furan unter milden Bedingungen in einem organischen Lösungsmittel in einem einzigen Reaktionsgefäß ohne Isolierung der Zwischenprodukte zur Herstellung einer Verbindung der allgemeinen Formel **24,** worin **R¹, R², ArI, ArIII** und **ArIV** wie oben definiert sind,
erhalten die ein Ester der Formeln **21** und **22** ist

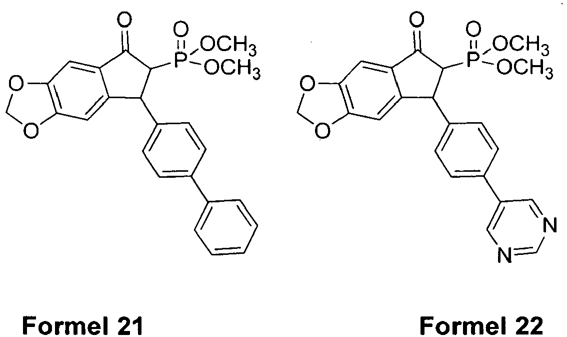

6. Verfahren nach Anspruch 1, **dadurch gekennzeichnet, daß** die Verbindung der Formel **25,** worin **R¹, R², R³, ArI** wie oben definiert sind und ArIII ein aromatischer Ring, substituiert oder unsubstituiert, ausgewählt aus der Gruppe bestehend aus Benzol, Naphthalin, Pyren oder einem sechsgliedrigen heteroaromatischen Ring, substituiert oder unsubstituiert, ausgewählt aus der Gruppe bestehend aus Pyridin, Pyrimidin oder einem heteroaromatischen Ring, ausgewählt aus der Gruppe bestehend aus Pyridin, Pyrimidin oder einem fünfgliedrigen aromatischen Ring, ist., ausgewählt aus der Gruppe bestehend aus Pyridin, Pyrimidin oder einem heteroaromatischen Ring, 5-gliedrig, substituiert oder unsubstituiert, ausgewählt aus der Gruppe bestehend aus Thiophen, Pyrrol oder Furan, unter milden Bedingungen, verbunden mit einer Verbindung der allgemeinen Formel **26** in einem anorganischen Lösungsmittel in einem einzigen Reaktionsgefäß ohne Isolierung der Zwischenprodukte zur Herstellung der Verbindungen der allgemeinen Formel**27**, worin **R¹, R², ArI** wie oben definiert sind und **ArIII** ist ein aromatischer Ring, der durch einen aromatischen Ring substituiert oder unsubstituiert ist, ausgewählt aus der Gruppe bestehend aus Benzol, Naphthalin, Pyren oder einem sechsgliedrigen heteroaromatischen Ring, substituiert oder unsubstituiert, ausgewählt aus der Gruppe bestehend aus Pyridin, Pyrimidin oder einem heteroaromatischen Ring, ausgewählt aus der Gruppe bestehend aus Thiophen, Pyrrol oder Furan.

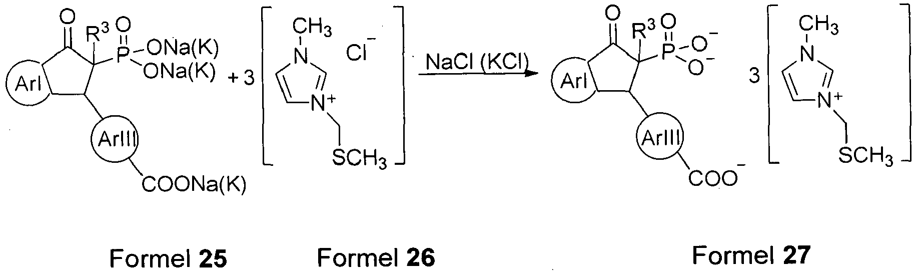

7. Verfahren nach Anspruch 6 **dadurch gekennzeichnet, daß** die Verbindung der Formel 24 ein Ester der Formeln 21 und 22 ist

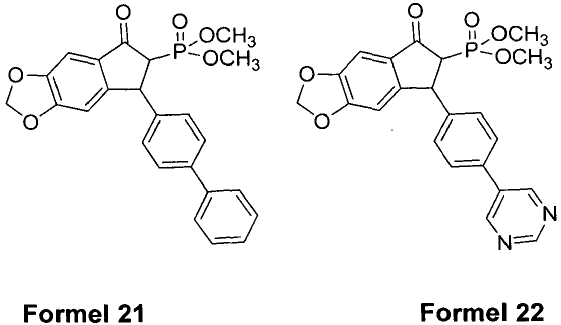

8. Verfahren nach Anspruch 1, **dadurch gekennzeichnet, daß** die Verbindung der Formel 25, worin R1, R2, R3, ArI wie oben definiert sind und ArIII ein aromatischer Ring, substituiert oder unsubstituiert, ausgewählt aus der Gruppe bestehend aus Benzol, Naphthalin, Pyren oder einem sechsgliedrigen heteroaromatischen Ring, substituiert oder unsubstituiert, ausgewählt aus der Gruppe bestehend aus Pyridin, Pyrimidin oder einem heteroaromatischen Ring, ausgewählt aus der Gruppe bestehend aus Pyridin, Pyrimidin oder einem fünfgliedrigen aromatischen Ring, ist., ausgewählt aus der Gruppe bestehend aus Pyridin, Pyrimidin oder einem heteroaromatischen Ring, 5-gliedrig, substituiert oder unsubstituiert, ausgewählt aus der Gruppe bestehend aus Thiophen, Pyrrol oder Furan, unter milden Bedingungen, verbunden mit einer Verbindung der allgemeinen Formel 26 in einem anorganischen Lösungsmittel in einem einzigen Reaktionsgefäß ohne Isolierung der Zwischenprodukte zur Herstellung der Verbindungen der allgemeinen Formel27, worin R1, R2, ArI wie oben definiert sind und ArIII ist ein aromatischer Ring, der durch einen aromatischen Ring substituiert oder unsubstituiert ist, ausgewählt aus der Gruppe bestehend aus Benzol, Naphthalin, Pyren oder einem sechsgliedrigen heteroaromatischen Ring, substituiert oder unsubstituiert, ausgewählt aus der Gruppe bestehend aus Pyridin, Pyrimidin oder einem heteroaromatischen Ring, ausgewählt aus der Gruppe bestehend aus Thiophen, Pyrrol oder Furan.

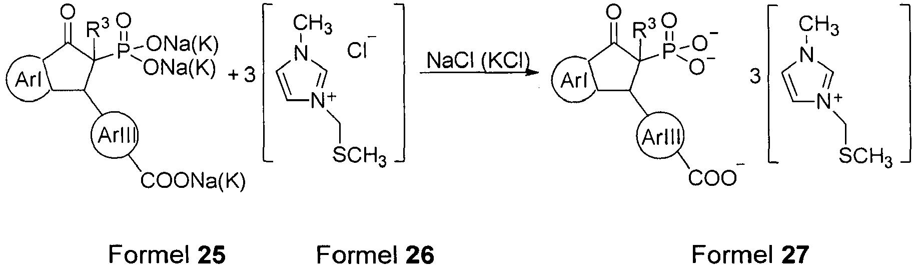

## Revendications

1. Un processus pour la préparation d'indanones-1 substituées 3-aryl-2-phosphoryle
**formule 1**
Où **R¹** et **R²** - sont identiques ou différents et représentent des atomes d'hydrogène, des atomes métalliques, sodium ou potassium, ou un groupe alkyle contenant 1 à 10 atomes de carbone, **R³** - représente un atome d'hydrogène ou un atome de fluor, et **ArI** et **ArII** sont identiques ou différents et représentent un cycle aromatique ou un biaryle dans le cas où ArII contient des cycles d'aryle, substitués ou non substitués, choisis dans le groupe constitué de benzène, naphtalène, pyrène, ou de cycles hétéroaromatiques à 6 membres, substitués ou non substitués, choisis dans le groupe constitué de pyridine, pyrimidine, ou de cycles hétéroaromatiques à cinq membres, substitués ou non substitués, choisis dans le groupe constitué de thiophène, pyrrole ou furane, **caractérisés par le fait que** la réaction de cyclisation d'esters de formule générale 5 est réalisée : 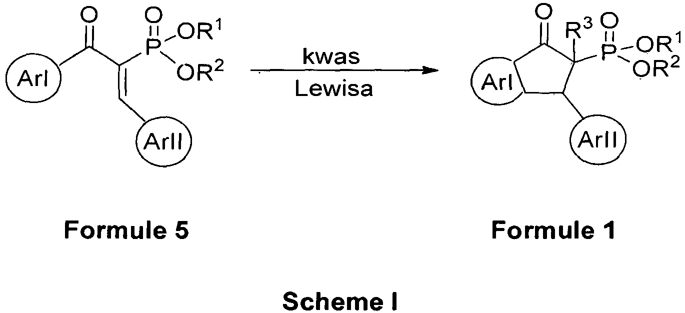 où **R¹, R², ArI** et **ArII** sont tels que définis plus haut en présence d'un acide de Lewis, par ex. FeCl₃ et AlCl₃ dans des conditions douces, dans un solvant organique, dans un réacteur unique, sans isolement des produits intermédiaires, pour la préparation des composés de la formule 1, où **R¹, R², ArI** et **ArII** sont tels que définis plus haut et **R³** est un atome d'hydrogène, par ex. composés représentés par les formules **2, 3** ou **4,** tel qu'indiqué sur le Schéma I.

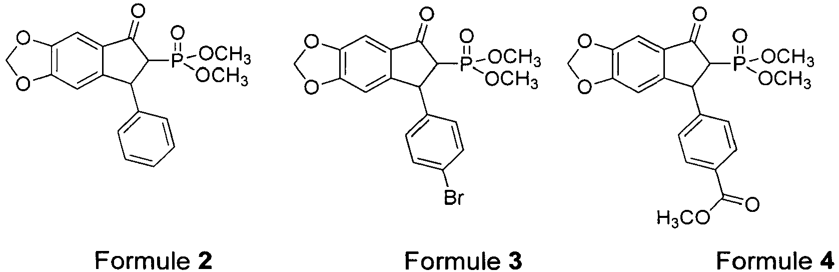

2. Une méthode suivant la revendication 1, **caractérisée par le fait que** le composé de formule générale **5** avec des groupes méthoxy (**R¹**=**R²**=Me) est cyclisé en présence d'un acide de Lewis, par ex. FeCl₃ et AlCl₃ FeCl₃ et AlCl₃, dans un solvant organique, par ex. toluène ou dichlorométhane, pour obtenir des composés de formule **1** avec de bons rendements, en une seule étape de réaction.

3. Une méthode suivant la revendication 1, **caractérisée par le fait que** les indanones-1 substituées 3-aryl-2-phosphoryle de formule générale **1,** où **R¹, R², ArI** et **ArIII** sont tels que définis plus haut, et **R³** est une fluorine, sont préparées par réaction de fluoration avec un composé de formule générale **9,** où **R¹, R², ArI** et **ArII** sont tels que définis plus haut, dans une position a, en présence de fluorobenzènesulfonimide **(NFSI),** dans des conditions douces, dans un solvant organique, dans un réacteur unique, sans isolement des produits intermédiaires, pour la préparation de composés de formule générale **10,** où **R¹, R², ArI** et **ArII** sont tels que définis plus haut, et **R³**=F,

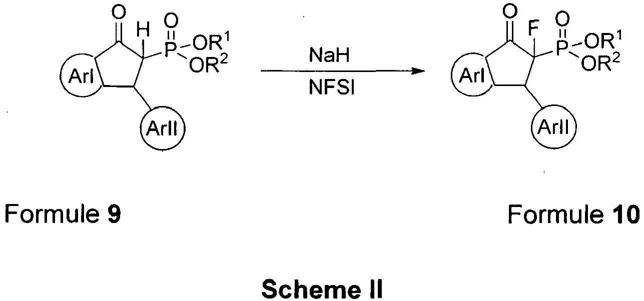

4. Une méthode suivant la revendication 3 pour la préparation d'esters représentés par les formules **6, 7** ou **8.**

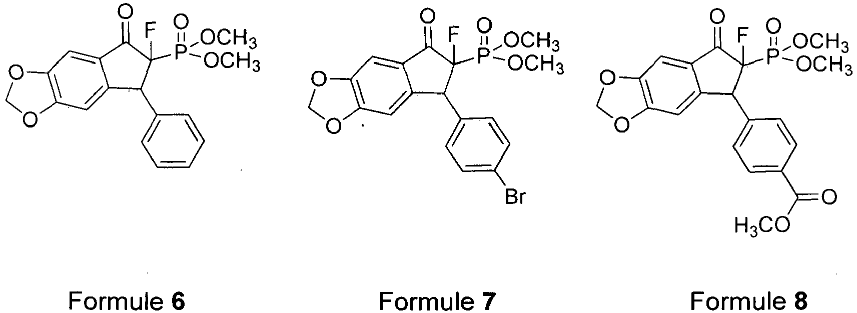

5. Une méthode suivant la revendication 1, **caractérisée par le fait que**, pour obtenir des indanones-1 substituées 3-aryl-2-phosphoryle de formule générale **1,** où **ArI, ArII** et **R³** sont tels que définis plus haut et **R¹** et **R²** sont identiques ou différent et représentent des atomes d'hydrogène ou un atome métallique, par ex. sodium ou potassium, des composés de formule générale **18,** où **R¹=R²**=Me, et **R³** est tel que défini plus haut, sont soumis à réaction d'hydrolyse en présence de bromure de triméthylsilyle TMSBr, dans un solvant organique, par ex. mélange de dichlorométhane et de méthanol, puis utilisant un alcali, par ex. hydroxyde de sodium ou potassium, la transformation des acides résultants de formule générale 19 en un mono ou des disels de formule générale **20** est réalisée, 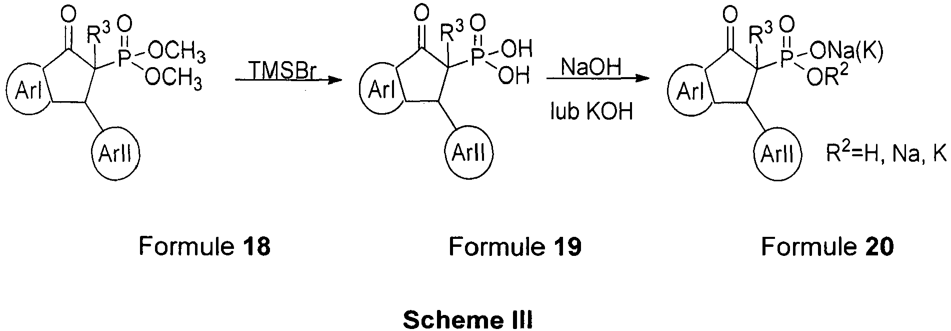 pour recevoir les composés représentés par les formules **11** à **15**

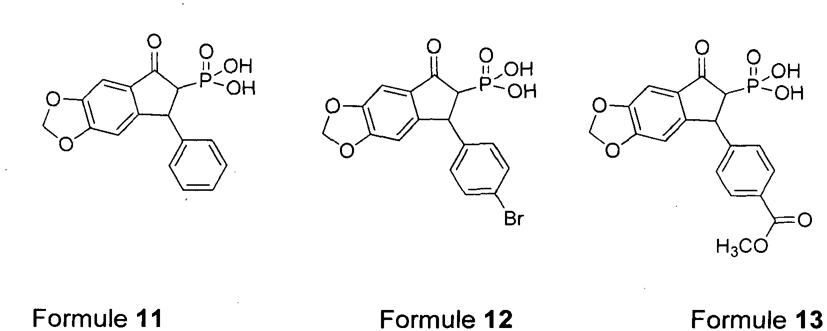

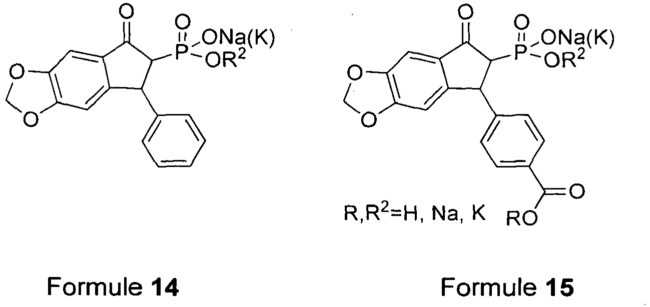

6. Une méthode suivant la revendication 1, **caractérisée par le fait que** les indanones-1 substituées 3-aryl-2-phosphoryle de formule générale 1, où **R¹, R², ArI** sont tels que définis plus haut, et **ArII** représente le biaryle contenant les cycles aromatiques, sont obtenues par couplage d'un composé de formule générale **23** avec de l'acide boronique aryl(IV), où **R¹, R², ArI** sont tels que définis plus haut, et **ArIII, ArIV** sont des cycles aromatiques, substitués ou non substitués, choisis dans le groupe constitué de benzène, naphtalène, pyrène, ou cycles hétéroaromatiques à six membres, substitués ou non substitués, choisis dans le groupe constitué de pyridine, pyrimidine, ou cycles hétéroaromatiques à cinq membres, substitués ou non substitués, choisis dans le groupe constitué de thiophène, pyrrole ou furane, dans des conditions douces, dans un solvant organique, dans un réacteur unique, sans isolement des produits intermédiaires, pour la préparation de composés de formule générale **24,** où **R¹, R², ArI, ArIII** et **ArIV** sont tels que définis plus haut,

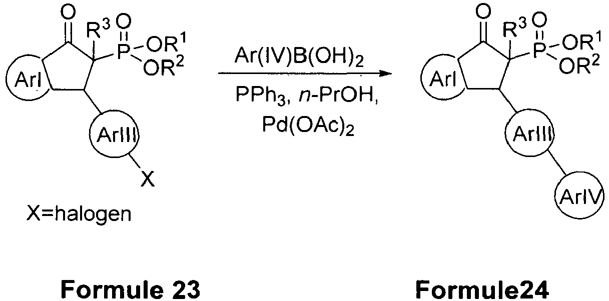

7. Un processus suivant la revendication 6, **caractérisé par le fait que** le composé de formule 24 est un ester représenté par les formules **21** et **22**

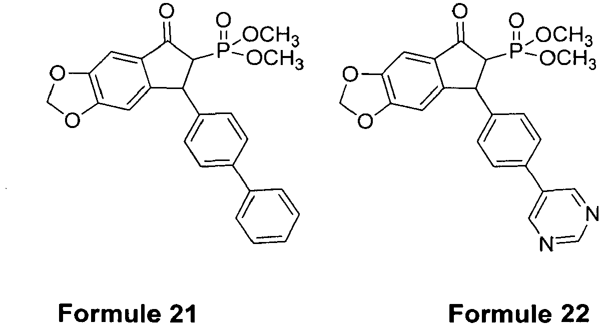

8. Un processus suivant la revendication 1, **caractérisé par le fait que** le composé de formule **25,** où **R¹, R², R³, ArI** sont tels que définis plus haut, et **ArIII** est un cycle aromatique substitué ou non substitué, choisi dans le groupe constitué de benzène, naphtalène, pyrène ou cycle hétéroaromatique à six membres, substitué ou non substitué, choisi dans le groupe constitué de pyridine, pyrimidine ou un cycle hétéroaromatique à cinq membres, substitué ou non substitué, choisi dans le groupe constitué de thiophène, pyrrole ou furane, est dans des conditions douces, couplé avec un composé de formule générale **26** dans un solvant organique, dans un réacteur unique, sans isolement des produits intermédiaires, pour la préparation des composés de formule générale **27,** où **R¹, R², ArI** sont tels que définis plus haut et **ArIII** est un cycle aromatique substitué ou non substitué, choisi dans le groupe constitué de benzène, naphtalène, pyrène ou cycle hétéroaromatique à six membres, substitué ou non substitué, choisi dans le groupe constitué de pyridine, pyrimidine ou un cycle hétéroaromatique à cinq membres, substitué ou non substitué, choisi dans le groupe constitué de thiophène, pyrrole ou furane.
